# EUROPÄISCHE PATENTSCHRIFT

(11) **EP 3 358 160 B1**
(45) Veröffentlichungstag und Bekanntmachung des Hinweises auf die Patenterteilung: **25.12.2019**
(21) Anmeldenummer: 18152684.9
(22) Anmeldetag: 22.01.2018
(51) Int. Cl.: F01N 3/30, F01N 3/32, B60T 17/02

(54) **BRENNKRAFTMASCHINE MIT EINER SEKUNDÄRLUFTPUMPE UND VERFAHREN ZUM BETREIBEN EINER BRENNKRAFTMASCHINE MIT EINER SEKUNDÄRLUFTPUMPE**
INTERNAL COMBUSTION ENGINE WITH SECONDARY AIR PUMP AND METHOD FOR OPERATING AN INTERNAL COMBUSTION ENGINE WITH A SECONDARY AIR PUMP
MOTEUR À COMBUSTION INTERNE AVEC UNE POMPE À AIR SECONDAIRE ET MÉTHODE POUR FAIRE FONCTIONNER UN MOTEUR À COMBUSTION INTERNE AVEC UNE POMPE À AIR SECONDAIRE

(30) Priorität: 02.02.2017 DE 102017201716
(43) Veröffentlichungstag der Anmeldung: 08.08.2018
(73) Patentinhaber: VOLKSWAGEN AKTIENGESELLSCHAFT, 38440 Wolfsburg (DE)
(72) Erfinder: Zink, Florian, 74906 Bad Rappenau (DE); Wodausch, Jens, 38108 Braunschweig (DE); Leise, Marcel, 38461 Danndorf (DE); Becker, Claus-Jürgen, 38440 Wolfsburg (DE)

(56) Entgegenhaltungen:
- EP-A1- 1 367 256
- DE-A1- 3 926 428
- DE-A1-102006 004 768
- DE-A1-102009 019 367
- DE-A1-102013 113 228

## Beschreibung

Die Erfindung betrifft eine Brennkraftmaschine mit einer Sekundärluftpumpe gemäß dem Oberbegriff des Anspruchs 1. Darüber hinaus betrifft die Erfindung ein Verfahren zum Betreiben einer Brennkraftmaschine mit einer Sekundärluftpumpe gemäß dem Oberbegriff des Anspruchs 3.

Durch Brennkraftmaschinen und deren Betrieb werden unerwünschte Verbrennungsprodukte, Partikel und Materialdämpfe in die Umwelt abgegeben. Diese Emissionen werden durch Gesetze auf Grenzwerte eingeschränkt. Um die Grenzwerte einzuhalten gelangen unter anderem Vorrichtungen zur Abgasbehandlung zum Einsatz. Wobei die Abgasbehandlungen häufig durch Sekundärluftpumpen unterstützt werden müssen.

Aus der DE 10 2004 001 831 B4 ist eine Abgasbehandlung mit einer Sekundärlufteinblasvorrichtung zum Aufheizen eines katalytischen Konverters bekannt. Diese Vorrichtung berücksichtigt bei der Steuerung der Sekundärlufteinblasvorrichtung den aktuellen Motorbetriebszustand und die aktuellen Abgasparameter.

Aus der DE 10 2009 019 367 A1 ist eine Leckdiagnose eines Bremsverstärkersystems bekannt. Dazu wird der Bremsverstärkerunterdruck bezüglich seiner Abfallrate betrachtet. Ein ausreichender Unterdruck des Bremskraftverstärkers kann hier mit einem Motorunterdruck durch den elektrischen Motor eines Hybridfahrzeugs aufrecht erhalten werden.

Aus der DE 10 2013 113 228 A1 ist eine Versorgung von Betriebskomponenten eines Kraftfahrzeugs mit Luft mittels einer Pumpvorrichtung bekannt. Eine Saugseite der Pumpvorrichtung kann mit der Unterdruckseite des Bremskraftverstärkers verbunden sein.

Gleiches gilt für DE 10 2006 004 768 A1 die ebenfalls den Einsatz einer Pumpvorrichtung in einem Verbrennungsmotor zeigt, wobei die Unterdruckseite der Pumpvorrichtung die Unterdruckseite des Bremskraftverstärkers beaufschlagt.

Aufgabe der vorliegenden Erfindung ist es, eine Sekundärluftpumpe für mehrere Funktionen in einer Brennkraftmaschine zu nutzen.

Diese Aufgabe wird erfindungsgemäß durch eine Brennkraftmaschine mit einer Sekundärluftpumpe mit den Merkmalen gemäß dem Anspruch 1 gelöst, sowie durch das Verfahren zum Betreiben einer Brennkraftmaschine mit einer Sekundärluftpumpe nach Anspruch 3. Vorteilhafte Weiterbildungen der Erfindung sind in den abhängigen Ansprüchen charakterisiert.

Die Aufgabe wird durch eine Brennkraftmaschine mit einer Sekundärluftpumpe, mit einem Abgasstrang und mit einer Sekundärluftleitung ausgestattet. Dabei ist eine Verbindung zwischen der Förderseite der Sekundärluftpumpe und dem Abgasstrang mit der Sekundärluftleitung dargestellt. Außerdem ist eine Unterdruckseite eines Bremskraftverstärkers mit einer Förderseite der Sekundärluftpumpe fluidisch verbunden.

Diese Anordnung hat den Vorteil, dass die Unterdruckseite des Bremskraftverstärkers mit der Sekundärluftpumpe eine Druckveränderung erfahren kann. Somit ist es möglich die Sekundärluftpumpe nicht nur für die Unterstützung der Abgasnachbehandlung zu nutzen. Eine Sekundärluftpumpe umfasst eine Pumpe, die Luft in den Abgasstrang fördern kann und so eine Sekundäre Luftquelle darstellt. Eine Sekundärluftpumpe saugt ein Volumen von einer Saugseite und fördert dies Volumen zu einer Förderseite. Auf der Förderseite herrscht somit ein höherer Druck als auf der Saugseite. Die Unterdruckseite des Bremskraftverstärkers umfasst die Seite des räumlich in zwei Seiten aufgeteilten Bremskraftverstärkers, die zur Verstärkung der Bremswirkung mit einem Unterdruck beaufschlagt wird. Eine fluidische Verbindung umfasst eine Verbindung von einem Ort zu einem anderen Ort, bei der eine Flüssigkeit oder ein Gas von einem Ort zum anderen Ort fließen kann. Eine Betrachtung von speziellen Druckbeschaffenheiten an den Orten wird dabei nicht berücksichtigt. Eine fluidische Verbindung ist somit schon ein möglicher Weg von A nach B über eine gegebene Passage. Diese Ausführung hat den Vorteil, dass ein Unterdruck an der Unterdruckseite des Bremskraftverstärkers indirekt erzeugt werden kann, zum Beispiel mit einem Venturi-Rohr. Die Leistung an der Unterdruckseite muss somit nicht der Leistung der Sekundärluftpumpe entsprechen.

Beispielsweise kann die fluidische Verbindung von der Unterdruckseite des Bremskraftverstärkers zur Saugseite der Sekundärluftpumpe mit einem ansteuerbaren Ventil schaltbar sein.

Ein Ventil umfasst eine Vorrichtung, die einen Fluidstrom in einer Leitung oder einer Verbindungsstelle regeln oder abstellen kann. Diese Regelung kann stufenlos oder in stufen erfolgen. Schaltbar umfasst, dass etwas bewusst verändert werden kann. Zum Beispiel kann ein Ansteuergerät ein Ventil mit elektrischen Signalen in verschiedene Zustände versetzen und so schalten. Ansteuerbar umfasst, dass ein Gerät mir elektrischen Signalen erreichbar ist. Das Gerät ist in diesem Fall ausgelegt, um elektrische Signale zu empfangen und zu verstehen. Diese Ausgestaltung hat den Vorteil, dass die Verbindung zu der Unterdruckseite des Bremskraftverstärkers regelbar ist. Es kann ein Steuergerät genutzt werden, um die Steuerung der Brennkraftmaschine mit der des Ventils zu koppeln und/oder abzustimmen. So kann auch eine vorausschätzende Steuerung eingestellt werden, die zukünftig wahrscheinliche Ereignisse auf Basis des geschehenden und geschehenen antizipiert.

Erfindungsgemäss ist ein Venturi-Rohr auf der Verbindung von der Unterdruckseite des Bremskraftverstärkers zu der Förderseite der Sekundärluftpumpe angeordnet

Diese Ausgestaltung hat den Vorteil, dass eine Beaufschlagung der Unterdruckseite des Bremskraftverstärkers mit einem Unterdruck so sehr bauteilarm und kostengünstig konstruiert werden kann. Ein Venturi-Rohr kann jede Form Von T-Stück einer Rohrleitung umfassen, bei dem an einer ersten Seite durch einen Fluidstrom in den übrigen Seiten ein Unterdruck entsteht.

Das erfindungsgemäße Verfahren zum Betreiben einer Brennkraftmaschine mit einer Sekundärluftpumpe und mit einer Sekundärluftleitung umfasst folgende Handlungen. In dem Verfahren fördert die Sekundärluftpumpe ein Volumen von einer Saugseite der Sekundärluftpumpe zu einer Förderseite der Sekundärluftpumpe. Diese Volumenförderung der Sekundärluftpumpe wird genutzt, um den Druck im Bremskraftverstärker zu ändern.

Das erfindungsgemäße Verfahren hat den Vorteil, dass mit dem Fördern Sekundärluftpumpe neben dem Hauptgrund für das Fördern ebenfalls der Bremskraftverstärker beeinflusst werden kann. Es kann aber auch nur der Bremskraftverstärker mit dem Fördern beeinflusst werden. Ein Volumen umfasst dabei eine räumliche Einheit die mit einem Fluid gefüllt ist und nicht physisch abgetrennt ist sondern beliebig in einem dreidimensionalen Raum eingeteilt werden kann. Dabei ist erfindungsgemäß vorgesehen, dass ein Volumen aus dem Bremskraftverstärker durch ein Venturi-Rohr zur Förderseite der Sekundärluftpumpe gesaugt werden kann.

Durch diese Ausführungsform kann auf vorteilhafte Weise ein Unterdruck in dem Bremskraftverstärker erzeugt werden. Der Aufbau dieses Unterdrucks ist abhängig von der Leistung der Volumenförderung der Sekundärluftpumpe in die Sekundärluftleitung und im Detail dem Abschnitt mit dem Venturi-Rohr. Die Dimensionierung des Venturi-Rohrs bestimmt im Wesentlichen dessen Saugwirkung, wenn ein Massenstrom durch die Hauptleitung führt. Somit kann für dieses Verfahren auf vorteilhafte Weise eine Regelung durch eine Auslegung des Bauteils ersetzt werden.

In einer bevorzugten Ausgestaltung des Erfindungsgemäßen Verfahrens kann ein Gasvolumen von der Förderseite der Sekundärluftpumpe in den Bremskraftverstärker gefördert werden. So kann der Druck im Bremskraftverstärker erhöht werden.

Dies führt auf vorteilhafte Weise zu einer weiteren Möglichkeit zur Drucküberwachung des Bremskraftverstärkers.

Eine weitere Ausgestaltung des erfindungsgemäßen Verfahrens kann der Druck im Bremskraftverstärker gegen die Zeit aufgetragen und überwacht werden.

Diese Ausgestaltung hat zum Vorteil, dass diese Auftragung und die Überwachung je für sich zu einer Diagnose und Überwachungsmöglichkeit führen. Eine Überwachungsmöglichkeit und überwachen kann zum Beispiel meinen, dass ein Steuergerät oder eine Recheneinheit die gemessenen Werte, Kurven und Änderungen mit Referenzen und/oder Grenzwerten vergleicht und bei einer zu Hohen Abweichung ein Fehler-, Diagnose- oder Warnprotokoll durchführt.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: eine nicht von der Erfindung umfasste Brennkraftmaschine mit einer Sekundärluftpumpe,
- Figur 2: eine bevorzugte Ausführungsform der erfindungsgemäßen Brennkraftmaschine mit einer Sekundärluftpumpe,
- Figur 3: eine nicht von der Erfindung umfasste Brennkraftmaschine mit einer Sekundärluftpumpe, und
- Figur 4: ein nicht von der Erfindung umfasstes Verfahren zum Betreiben einer Brennkraftmaschine mit einer Sekundärluftpumpe.

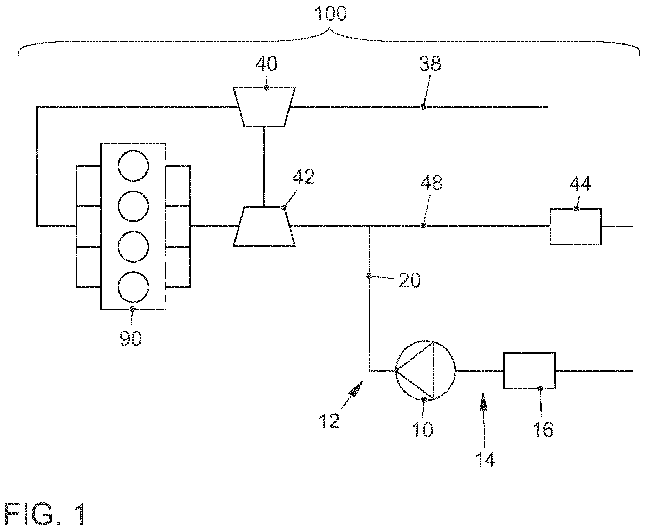

Die Figur 1 zeigt eine Brennkraftmaschine 100 mit einer Sekundärluftpumpe 10. Von einem Frischgasstrang 38 kommt Luft durch den Verdichter 40 des Abgasturboladers über den Einlasskrümmer in den Motorblock 90. Aus dem Motorblock 90 gelangt das Abgas durch die Turbine 42 des Abgasturboladers in den Abgasstrang 48. In dem Abgasstrang 48 kann mindestens ein Katalysator 44 und/oder mindestens ein Partikelfilter angeordnet sein. Stromab der Turbine 42 mündet eine Sekundärluftleitung 20 in den Abgasstrang 48. Die Sekundärluftleitung 20 kann insbesondere zwischen dem mindestens einen Katalysator 44 und der Turbine 42 in den Abgasstrang 48 einmünden. Erfindungsgemäß kann die Sekundärluftleitung 20 an einer beliebigen Stelle in den Abgasstrang 48 münden. Bevorzugte Stellen können im Abgaskrümmer nach dem Motorblock 90 sein, unmittelbar vor oder nach der Turbine 42 und/oder vor einem Bauteil zur Abgasbehandlung (dies kann beispielsweise ein Katalysator 44 und/oder ein Partikelfilter sein). Die Sekundärluftleitung 20 wird durch eine Sekundärluftpumpe 10 in zwei Seiten unterteilt. Eine Förderseite 12 und eine Saugseite 14 sind die zwei Seiten der Sekundärluftleitung 20. Die Förderseite 12 der Sekundärluftleitung 20 ist dabei die Seite, die von der Sekundärluftpumpe 10 mit Luft durchfördert wird. Die Förderseite 12 ist somit die Seite stromab der Sekundärluftpumpe 10. Die Saugseite 14 ist die Seite, die von der Sekundärluftpumpe 10 genutzt wird, um Luft anzusaugen. Die Saugseite 14 ist somit die Seite stromauf der Sekundärluftpumpe 10. Die Ausführungsform in Figur 1 hat auf der Saugseite 14 den Bremskraftverstärker 16 angeordnet. Dadurch kann der Bremskraftverstärker 16 von der Saugseite 14 her durch die Sekundärluftpumpe 10 mit einem Unterdruck beaufschlagt werden. Besonders bevorzugt geschieht dies bei einer Vorrichtung an der Unterdruckseite des Bremskraftverstärkers 16.

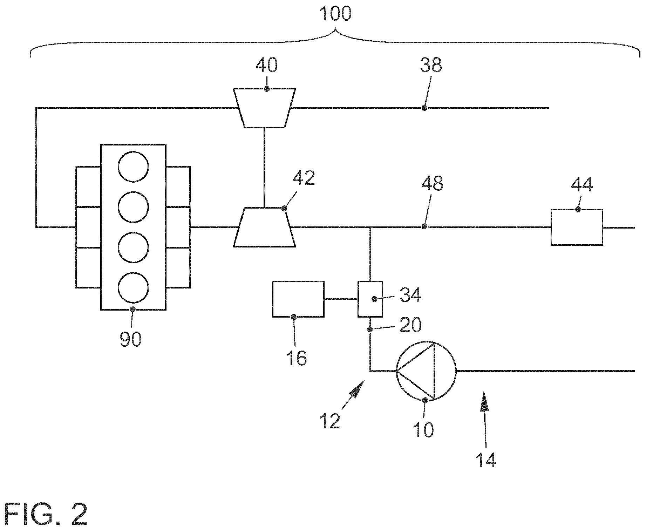

Figur 2 zeigt eine Brennkraftmaschine 100 mit einer erfindungsgemäßen Vorrichtung. Von einem Frischgasstrang 38 kommt Luft durch den Verdichter 40 des Abgasturboladers über den Einlasskrümmer in den Motorblock 90. Aus dem Motorblock 90 gelangt das Abgas durch die Turbine 42 des Abgasturboladers in den Abgasstrang 48. In dem Abgasstrang 48 ist mindestens ein Katalysator 44 und/oder mindestens ein Partikelfilter angeordnet. Stromab der Turbine 42 mündet eine Sekundärluftleitung 20 in den Abgasstrang 48. Die Sekundärluftleitung 20 kann insbesondere zwischen dem mindestens einen Katalysator 44 und der Turbine 42 in den Abgasstrang 48 einmünden. Erfindungsgemäß kann die Sekundärluftleitung 20 an einer beliebigen Stelle in den Abgasstrang 48 münden. Bevorzugte Stellen können im Abgaskrümmer nach dem Motorblock 90 sein, unmittelbar vor oder nach der Turbine 42 und/oder vor einem Bauteil zur Abgasbehandlung (dies kann beispielsweise ein Katalysator 44 und/oder ein Partikelfilter sein). Die Sekundärluftleitung 20 wird durch eine Sekundärluftpumpe 10 in zwei Seiten unterteilt. Eine Förderseite 12 und eine Saugseite 14 sind die zwei Seiten der Sekundärluftleitung 20. Die Förderseite der Sekundärluftleitung 20 ist dabei die Seite, die von der Sekundärluftpumpe 10 mit Luft durchfördert wird. Die Förderseite 12 ist somit die Seite stromab der Sekundärluftpumpe 10. Die Saugseite 14 ist die Seite, die von der Sekundärluftpumpe 10 genutzt wird, um Luft anzusaugen. Die Saugseite 14 ist somit die Seite stromauf der Sekundärluftpumpe 10. Auf der Förderseite 12 der Sekundärluftleitung 20 ist ein T-Stück als Venturi-Rohr 34 ausgebildet. Diese Venturi-Rohr 34 stellt die Verbindung zwischen einem Bremskraftverstärker 16 und der Sekundärluftleitung 20 auf der Förderseite 12 her.

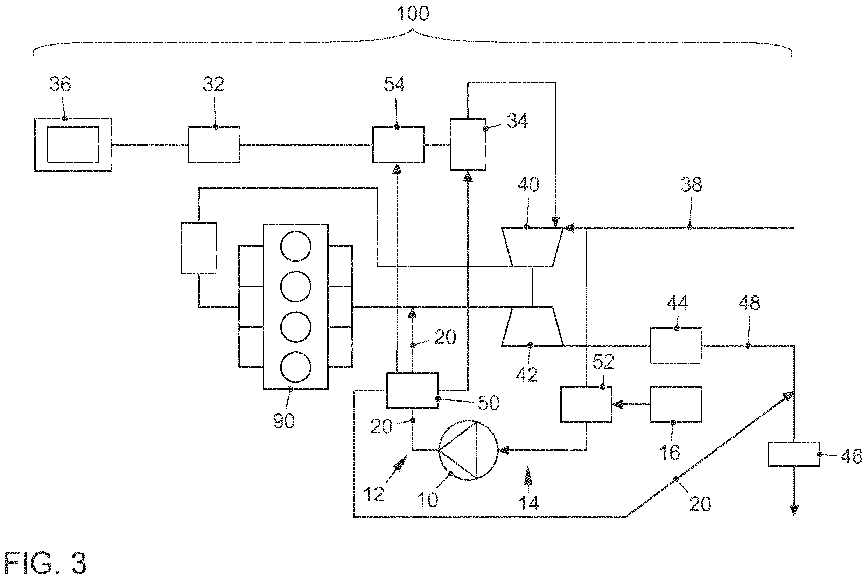

Die Figur 3 zeigt eine nicht von der Erfindung umfasste Brennkraftmaschine 100 mit einer Sekundärluftpumpe 10. Die Brennkraftmaschine 100 umfasst einen Frischgasstrang 38, einen Motorblock 90 und einen Abgasstrang 48. Der Frischgasstrang 38 kann einen Luftfilter umfassen und ist mit einem Verdichter 40 eines Abgasturboladers ausgestattet. Zwischen dem Verdichter 40 und dem Motorblock 90 befindet sich stromab des Verdichters 40 eine Drosselklappe auf dem Frischgasstrang 38. Stromab der Drosselklappe befindet sich ein Einlasskrümmer, der den Frischgasstrang 38 in die einzelnen Brennkammern des Motorblocks 90 aufteilt. Das Abgas wird bei Austritt aus dem Motorblock 90 von einem Abgaskrümmer in den Abgasstrang 48 zusammengeführt. Der Abgasstrang 48 führt stromab des Abgaskrümmers durch die Turbine 42 des Abgasturboladers. Nach der Turbine 42 ist auf dem Abgasstrang 48 ein Katalysator 44 angeordnet. Ein Katalysator 44 kann allgemein jede Abgasbehandlungskomponente sein, die einen Inhaltsstoff des Abgases zumindest teilweise in einen anderen Stoff umwandelt. Der Katalysator 44 kann motornah oder motorfern verbaut werden. Motorfern verbaut sind Bauteile einer Abgasanlage, welche sich im Unterboden eines Fahrzeugs mit einer erfindungsgemäßen Brennkraftmaschine befinden. Der Katalysator 44 kann stromab oder stromauf einer Turbine 42 im Abgasstrang angeordnet sein. Stromab des Katalysators 44 ist ein Partikelfilter 46 angeordnet. Ein Partikelfilter 46 beschreibt hier ein Bauteil in einem Abgasstrang 48, das zu dem Zweck eingebaut wurde, eine Partikelkonzentration im Abgasstrom stromab eines Partikelfilters 44 gegenüber einer Partikelkonzentration im Abgasstrom stromauf eines Partikelfilters 44 zu reduzieren. Der Partikelfilter 44 kann insbesondere ein Ottopartikelfilter oder ein Dieselpartikelfilter sein. Ottopartikelfilter unterscheiden sich von Dieselpartikelfiltern zum Beispiel in der strukturellen Beschaffenheit des Substrats zum Filtern und hinsichtlich der Beschichtungen des Substrats zum Filtern. Dieser Unterschied ist unter anderem darin begründet, dass die Partikel im Abgas von Ottomotoren eine andere Struktur haben und in der Regel einen geringeren Durchmesser haben, als die Partikel im Abgas von Dieselmotoren. Die Brennkraftmaschine 100 umfasst neben den vorgenannten Strukturen auch ein Leitungssystem zum Einblasen von Luft. Das Leitungssystem ist Teil der Brennkraftmaschine 100, um deren Betrieb zu verbessern. Vom Frischgasstrang 38 zweigt eine Sekundärluftleitung 20 zu einer Sekundärluftpumpe 10 ab. Die Sekundärluftpumpe 10 kann einen regelbaren Luftmassenstrom befördern oder nur einen bestimmten Luftmassenstrom befördern. Dies hat den Vorteil dass die Luftmasse von der Pumpensteuerung oder von regelbaren Ventilen bestimmt werden kann. Die Sekundärluftleitung 20 stellt auch eine Fluidverbindung zwischen der Sekundärluftpumpe 10 und dem Frischgasstrang 38 dar. Dabei ist eine bevorzugte Anordnung, dass diese Fluidverbindung stromab eines Luftfilters des Frischgasstrangs 38 abzweigt, da so auf vorteilhafte Weise der Luftfilter für mehrere Bauteile die Luft filtriert. Die Sekundärluftpumpe 10 kann einen Luftstrom in eine Sekundärluftleitung 20 und deren andere Teile einbringen. Die Sekundärluftleitung 20 stromab der Sekundärluftpumpe 10 ist die Förderseite 12. Die Sekundärluftleitung stromauf der Sekundärluftpumpe 10 ist die Saugseite 14. Auf der Saugseite 14 der Sekundärluftleitung ist ein 3/2-Wege-Ventil 52 angeordnet. An dem anderen Pfad des 3/2-Wege-Ventils 52 ist ein Bremskraftverstärker 16 angeordnet. Der Bremskraftverstärker 16 kann bevorzugt mit der Unterdruckseite des Bremskraftverstärkers 16 mit dem 3/2-Wege-Ventil 52 fluidisch verbunden sein. In einer bevorzugten Variante der erfindungsgemäßen Vorrichtung kann der Bremskraftverstärker 16 auch mit dem X/Y Ventil 54 fluidisch verbunden sein und so eine Verbindung zur Förderseite 12 der Sekundärluftleitung 20 aufweisen. Ein X/Y-Ventil 54 kann erfindungsgemäß eine 3/2-Wege-Ventil sein oder ein anderes Ventil das selektiv zwischen den 3 Verbindungen des Ventils schalten kann. Der Luftstrom der Sekundärluftleitung 10 ist zwischen den möglichen Sekundärluftleitungen 20 mit einem 5/2-Wege-Ventil 50 verteilbar und steuerbar. Das 5/2-Wege-Ventil 50 kann dabei den Luftstrom entweder stufenlos zwischen den angeschlossenen Leitungen verteilen oder wahlweise immer nur eine Leitung ansteuern. Durch das 5/2-Wege-Ventil 50 kann so auf vorteilhafte Weise der Luftstrom der Sekundärluftpumpe 10 gesteuert und verteilt werden. In dieser Ausführungsform der Erfindung führt vom 5/2-WegeVentil 50 die Sekundärluftleitung 20 zum Abgasstrang 48 zu einer Stelle Stromauf des Partikelfilters 46 und mündet an dieser Stelle in den Abgasstrang 48. So kann mit Hilfe der Sekundärluftleitung 20 in Verbindung mit der Sekundärluftpumpe 10 und dem 5/2-Wege-Ventil 50 ein Luftstrom zum Regenerieren des Partikelfilters 46 in den Abgasstrang 48 eingebracht werden. So kann der Partikelfilter 46 auf vorteilhafte Weise regeneriert werden, ohne dass eine motorische Verstellung erfolgt, um mehr Sauerstoff in den Abgasstrang 48 zu befördern. In dieser Ausführungsform der Erfindung können mit dem 5/2-Wege-Ventil 50 auch die weiteren Teile der Sekundärluftleitung 20 mit einem Luftstrom der Sekundärluftpumpe 10 beaufschlagt werden. Diese weiteren Teile der Sekundärluftleitung 20 münden unter anderem stromauf des Katalysators 44 in den Abgasstrang 48. Mit einem Luftstrom durch die weiteren Teile der Sekundärluftleitung 20 kann besonders vorteilhaft ein Katalysator 44 aufgeheizt werden. Eine exotherme Reaktion zwischen brennbaren Inhaltsstoffen der Abgase und dem Sauerstoff des eingebrachten Luftstroms liefert so die Energie zum Heizen des Katalysators 44, mit einem Vorteil gegenüber einer Verstellung des Motors zur Bereitstellung dieser Hitze. Das 5/2-WegeVentil 50 ist auch mit einem weiteren Teil der Sekundärluftleitung 20 fluidisch verbunden. Dieser Teil erstreckt sich bis zum Frischgasstrang 38 und mündet unmittelbar vor dem Verdichter 40 in den Frischgasstrang 38 oder in den Verdichter 40. In dieser erfindungsgemäßen Ausführungsform ist diesem Teil der Sekundärluftleitung 20 ein T-Stück als Venturi-Rohr 34 angeordnet. Von diesem T-Stück als Venturi-Rohr 34 geht ein Abzweig ab. Der Abzweig schafft eine Verbindung mit einem Behälter für Kraftstoffdämpfe 32. Dabei ist der Behälter für Kraftstoffdämpfe 32 fluidisch mit dem Kraftstofftank 36 der Brennkraftmaschine 100 verbunden. Wenn ein Luftstrom durch diesen Teil der Sekundärluftleitung fließt, so wird durch das Venturi-Rohr 34, das insbesondere als Venturidüse ausgeführt sein kann, der Behälter für Kraftstoffdämpfe 32 mit einem Unterdruck beaufschlagt. Die Kraftstoffdämpfe werden so aus dem Behälter für Kraftstoffdämpfe 32, dem Abzweig und dem Kraftstofftank 36 gesogen. Die Kraftstoffdämpfe werden im Anschluss zusammen mit dem Luftstrom in den Frischgasstrang 38 befördert. Das Austragen der Kraftstoffdämpfe aus dem Behälter für Kraftstoffdämpfe 32 ist besonders vorteilhaft, wenn die Kraftstoffdämpfe reversibel in einem Aktivkohlefilter adsorbiert werden. Der Aktivkohlefilter kann insbesondere in dem Behälter für Kraftstoffdämpfe 32 angeordnet sein.

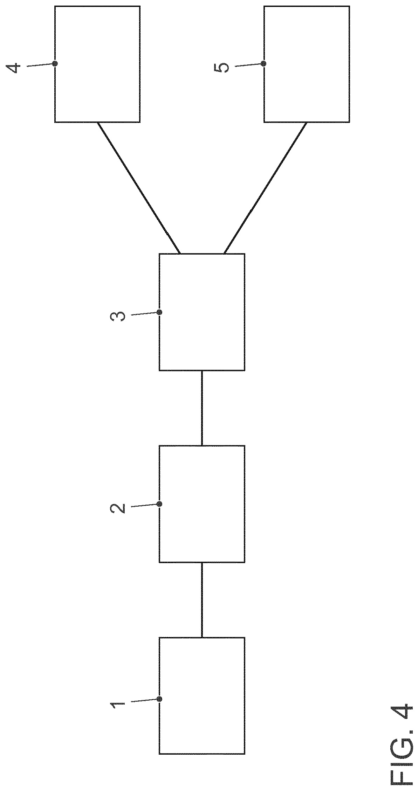

Die Figur 4 zeigt ein Schema einer Ausführungsform eines nicht von der Erfindung umfassten Verfahrens. In einem ersten Schritt 1 wird die Brennkraftmaschine 100 eines Fahrzeuges gestartet. Im zweiten Schritt 2 geht das Fahrzeug in den Fahrbetrieb über. Im dritten Schritt 3 wird der Druck in einem Bremskraftverstärker überprüft. Der Druck kann bevorzugt stationär mit einer einzelnen Messung oder mit mehreren Messungen über einen Zeitverlauf bestimmt werden. Dabei ist entscheidend, dass bestimmte Grenzwerte eingehalten werden (diese Werte können beispielsweise im Steuergerät der Brennkraftmaschine hinterlegt sein). Sollte der Druck oder Unterdruck im Bremskraftverstärker geändert werden müssen, so kann im achten Schritt 8 folgendes geschehen. Die Sekundärluftpumpe wird aktiviert, um den Unterdruck im Bremskraftverstärker zu ändern. Der Druck im Bremskraftverstärker ändert sich dabei immer in beiden Kammern. Je nach Konstruktion der Vorrichtung müssen diverse Ventile geschaltet werden, um die Verringerung des Drucks im Bremskraftverstärker zu bewirken. Sollte festgestellt werden, dass der Druck im Bremskraftverstärker in Ordnung ist, so können erfindungsgemäß zumindest folgende Nutzen der Sekundärluftpumpe 10 durchgeführt werden. Zum einen kann Sekundärluft in den Abgasstrang eingeblasen werden. So kann mit der Sekundärluft ein Ottopartikelfilter regeneriert werden. So kann mit der Sekundärluft auch ein Katalysator regeneriert werden. So kann mit der Sekundärluft eine Abgasanlage geheizt werden. All dies geschieht durch den erhöhten Sauerstoffanteil des Abgases durch die Sekundärluft. Der Luftstrom der Sekundärluftpumpe kann auch genutzt werden, um die Abdichtung der Anlage des Kraftstofftanks zu benutzen. Dazu kann die Anlage des Kraftstofftanks einen Kraftstofftank, diverse Leitungen, Kraftstoffpumpen und/oder Adsorbtions-Einrichtungen enthalten. Adsorbtions-Einrichtungen können dabei Aktivkohlefilter sein oder jede andere Einrichtung, die Kraftstoff und/oder Kraftstoffdämpfe reversibel binden kann.

### Bezugszeichenliste

- 1: erster Schritt
- 2: zweiter Schritt
- 3: dritter Schritt
- 4: vierter Schritt
- 5: fünfter Schritt
- 10: Sekundärluftpumpe
- 12: Förderseite
- 14: Saugseite
- 16: Bremskraftverstärker
- 20: Sekundärluftleitung
- 32: Behälter für Kraftstoffdämpfe
- 34: Venturi-Rohr
- 36: Kraftstofftank
- 38: Frischgasstrang
- 40: Verdichter
- 42: Turbine
- 44: Katalysator
- 46: Partikelfilter
- 48: Abgasstrang
- 50: 5/2-Wege-Ventil
- 52: 3/2-Wege-Ventil
- 54: Y/N-Ventil
- 90: Motorblock
- 100: Brennkraftmaschine

## Patentansprüche

1. Brennkraftmaschine (100) mit einer Sekundärluftpumpe (10), mit einem Abgasstrang (48) und mit einer Sekundärluftleitung (20), die eine Verbindung zwischen der Förderseite (12) der Sekundärluftpumpe (10) und dem Abgasstrang (48) darstellt, wobei eine Unterdruckseite eines Bremskraftverstärkers (16) mit der Sekundärluftpumpe (10) fluidisch verbunden ist,
**dadurch gekennzeichnet,**
**dass** die Unterdruckseite des Bremskraftverstärkers (16) mit einer Förderseite (12) der Sekundärluftpumpe (10) fluidisch verbunden ist und ein Venturi-Rohr (34) auf der fluidischen Verbindung von der Unterdruckseite des Bremskraftverstärkers (16) zu der Förderseite (12) der Sekundärluftpumpe (10) angeordnet ist.

2. Brennkraftmaschine (100) mit einer Sekundärluftpumpe (10) nach Anspruch 1,
**dadurch gekennzeichnet,**
**dass** fluidische Verbindung von der Unterdruckseite des Bremskraftverstärkers (16) zu der Förderseite (12) der Sekundärluftpumpe (10) mit einem ansteuerbaren Ventil schaltbar ist.

3. Verfahren zum Berteiben einer Brennkraftmaschine (100) mit einer Sekundärluftpumpe (10), mit einem Abgasstrang (48) und mit einer Sekundärluftleitung (20), wobei die Sekundärluftpumpe (10) ein Volumen von einer Saugseite (14) der Sekundärluftpumpe (10) zu einer Förderseite (12) der Sekundärluftpumpe (10) fördert, und wobei die Volumenförderung der Sekundärluftpumpe (10) genutzt wird, um den Druck im Bremskraftverstärker (16) zu ändern,
**dadurch gekennzeichnet,**
**dass** ein Gasvolumen aus dem Bremskraftverstärker (16) durch ein Venturi-Rohr (34) zur Förderseite (12) der Sekundärluftpumpe (10) gesaugt wird.

4. Verfahren zum Betreiben einer Brennkraftmaschine (100) mit einer Sekundärluftpumpe (10) nach Anspruch 3, **dadurch gekennzeichnet,**
**dass** ein Gasvolumen von der Förderseite (12) der Sekundärluftpumpe (10) in den Bremskraftverstärker (16) gefördert wird und so der Druck im Bremskraftverstärker (16) erhöht wird.

5. Verfahren zum Betreiben einer Brennkraftmaschine (100) mit einer Sekundärluftpumpe (10) nach Anspruch 3, **dadurch gekennzeichnet,**
**dass** der Druck im Bremskraftverstärker (16) gegen die Zeit aufgetragen und überwacht wird.

## Claims

1. An internal combustion engine (100) with a secondary air pump (10), with an exhaust gas line (48) and with a secondary air line (20), which constitutes a connection between the conveying side (12) of the secondary air pump (10) and the exhaust gas line (48), wherein a negative pressure side of an brake force booster (16) is fluidically connected to the secondary air pump (10),
**characterized in**
**that** the negative pressure side of the brake force booster (16) is fluidically connected to a conveying side (12) of the secondary air pump (10) and a venturi tube (34) is arranged on the fluidic connection from the negative pressure side of the brake force booster (16) to the conveying side (12) of the secondary air pump (10).

2. The internal combustion engine (100) with a secondary air pump (10) according to Claim 1
**characterized in**
**that** the fluidic connection from the negative pressure side of the brake force booster (16) to the conveying side (12) of the secondary air pump (10) can be switched with a controllable valve.

3. A method for operating an internal combustion engine (100) with a secondary air pump (10), with an exhaust gas line (48) and with a secondary air line (20), wherein the secondary air pump (10) conveys a volume from a suction side (14) of the secondary air pump (10) to a conveying side (12) of the secondary air pump (10), and wherein the volume conveyance of the secondary air pump (10) is used, in order to change the pressure in the brake force booster (16),
**characterized in**
**that** a gas volume is sucked from the brake force booster (16) through a venturi tube (34) to the conveying side (12) of the secondary air pump (10).

4. The method for operating an internal combustion engine (100) with a secondary air pump (10) according to Claim 3,
**characterized in**
**that** a gas volume is conveyed from the conveying side (12) of the secondary air pump (10) into the brake force booster (16) and thus the pressure in the brake force booster (16) is increased.

5. The method for operating an internal combustion engine (100) with a secondary air pump (10) according to Claim 3,
**characterized in**
**that** the pressure in the brake force booster (16) is applied against time and monitored.

## Revendications

1. Moteur à combustion interne (100), avec une pompe d'air secondaire (10), avec une ligne d'échappement (48) et avec une conduite d'air secondaire (20) qui représente un raccordement entre le côté refoulement (12) de la pompe d'air secondaire (10) et la ligne d'échappement (48), un côté dépression d'un servofrein (16) étant raccordé fluidiquement à la pompe d'air secondaire (10),
**caractérisé en ce que**
le côté dépression du servofrein (16) est raccordé fluidiquement à un côté refoulement (12) de la pompe d'air secondaire (10), et un tube Venturi (34) est disposé sur le raccordement fluidique conduisant du côté dépression du servofrein (16) vers le côté refoulement (12) de la pompe d'air secondaire (10).

2. Moteur à combustion interne (100) avec une pompe d'air secondaire (10) selon la revendication 1,
**caractérisé en ce que**
le raccordement fluidique conduisant du côté dépression du servofrein (16) vers le côté refoulement (12) de la pompe d'air secondaire (10) peut être commuté avec une soupape commandée.

3. Procédé de fonctionnement d'un moteur à combustion interne (100) avec une pompe d'air secondaire (10), avec une ligne d'échappement (48) et avec une conduite d'air secondaire (20), la pompe d'air secondaire (10) transportant un volume à partir d'un côté aspiration (14) de la pompe d'air secondaire (10) vers un côté refoulement (12) de la pompe d'air secondaire (10), et le transport volumique de la pompe d'air secondaire (10) étant utilisé pour faire varier la pression dans le servofrein (16),
**caractérisé en ce**
**qu'**un volume gazeux est aspiré à partir du servofrein (16) par un tube venturi (34) vers le côté refoulement (12) de la pompe d'air secondaire (10).

4. Procédé de fonctionnement d'un moteur à combustion interne (100) avec une pompe d'air secondaire (10) selon la revendication 3,
**caractérisé en ce**
**qu'**un volume gazeux est transporté à partir du côté refoulement (12) de la pompe d'air secondaire (10) vers le servofrein (16), et ainsi la pression dans le servofrein (16) est augmentée.

5. Procédé de fonctionnement d'un moteur à combustion interne (100) avec une pompe d'air secondaire (10) selon la revendication 3,
**caractérisé en ce que**
la pression dans le servofrein (16) est marquée en fonction du temps et est surveillée.
